# EUROPEAN PATENT SPECIFICATION

(11) **EP 4 099 546 B1**
(45) Date of publication and mention of the grant of the patent: **02.12.2026**
(21) Application number: 20916823.6
(22) Date of filing: 31.01.2020
(51) Int. Cl.: H02K 3/51, H02K 3/24

(54) **ROTOR AND ROTARY ELECTRIC MACHINE**
ROTOR UND ELEKTRISCHE DREHMASCHINE
ROTOR ET MACHINE ÉLECTRIQUE TOURNANTE

(43) Date of publication of application: 07.12.2022
(73) Proprietor: Weg Equipamentos Elétricos S/A, 89256900 Jaragua do Sul (BR)
(72) Inventor: ROGER STRELOW, Daniel, 89253-523 Jaraguá do Sul (BR); RAPHAELA VOLTOLINI, Danielle, 89256-210 Jaraguá do Sul (BR); SCHNEIDER POREPP, Guilherme, 89255-694 Jaraguá do Sul (BR); MARCELO ADRATT, Ricardo, 89275-000 Schroeder (BR); VEGINI, Thiago, 89220-820 Joinville (BR)
(74) Representative: Cabinet Beaumont
(86) International application number: PCT/BR2020/050020
(87) International publication number: WO 2021/151176

(56) References cited:
- EP-A1- 3 291 417
- EP-B1- 1 841 042
- EP-B1- 2 696 473
- JP-A- S57 116 564
- JP-U- S5 222 506
- US-A1- 2007 252 473
- US-B1- 6 870 299
- US-B2- 8 525 376
- US-B2- 8 629 589

## Description

### FIELD OF THE INVENTION

The present invention relates to the field of rotary electrical machines with rotor wound with cylindrical poles.

### BACKGROUND OF THE INVENTION

Rotary electrical machines are equipment used for the transformation of electrical into mechanical energy, in the case of motors, and vice versa, in the case of generators. They consist essentially of four basic structures: rotor, stator, bearings and housing.

In the case of a rotor, one of the forms of construction is the so-called wound rotor that consists of a ferric core, called a pack of plates, obtained from the stacking of a certain number of steel sheets, containing slots or simplified housings arranged at the end of the sheets, which will be filled by coils composed of conductive material, such as wires or copper bars.

The coils may, among other configurations known in the area, be formed from a continuous wire of conductive material, such as copper, wrapped in at least one layer of insulating material, each layer of wire being disposed over another within said slots. Thus, each coil is composed of a stacking of insulated copper wires with a final helical shape, since the wire is continuous and arranged continuously until it fills the slot in its entirety. Several coils are arranged within the slots forming the turns and these, when grouped, form the poles.

As the coil constitutes a closed path, its ends are arranged in a region external to the rotor pack, called the coil head. Thus, this particular form of arrangement does not employ bonding means between all the layers of wire constituting the coil.

In the inner portion of the pack of plates the layers are completely contained in the slots of the sheets, but in the region of the coil heads the wires are loose and therefore susceptible to all sorts of mechanical stresses that a rotating body with circulation of electric current can be subjected to. That is, during the operation of the equipment, the rotor coils will undergo mechanical stresses due to centripetal loading, and stresses due to the expansion of the conductive material developing from its heating, resulting of the circulation of current in its cross section.

Therefore, it is essential not only to use means that retain the coil head radially, but also to keep the coils in proper longitudinal and transverse positioning.

For radial retention, means such as composite or metallic material straps are traditionally employed. On the other hand, for longitudinal retention, spacer shims made of composite material, or any electrical insulating material, are used in the region between turns arranged longitudinally in relation to the axis of rotation of the machine.

Some specific types of coiled rotors, especially those applied to turbogenerators, which operate at high revolutions, commonly employ, in addition to the longitudinal shims between turns, shims arranged between turns in the circumferential direction, that is, for retention of the transverse movement of the coil. In these machines, shims can also be employed between adjacent poles with the same structural function.

However, in fast machines, these shims can be used for a function other than structural: they can perform thermal function by making paths that interconnect the chambers formed between the turns, thus allowing the cooling fluid of the ventilation circuit to reach the largest possible surface area of the conductors, thus performing the appropriate thermal exchange.

In these cases, the shims have holes, or shoulders, of different shapes in order to conduct the flow of cooling fluid.

However, it is clear that the heat distribution in the region of the coil heads is not homogeneous, both when comparing the temperature of each adjacent turn, as in the various portions of each coil (straight region of outlet of the pack of plates and curved region of the coil). This is due to the lack of uniformity in the air flow in the region of the coil head, reflecting the existence of regions with greater or lesser pressure drop than others. This behavior leads to a less advantageous and less efficient design than a similar design with a more homogeneous temperature distribution.

The solutions of spacer shims of the state of the art fail to provide a solution to the technical problem related to temperature homogeneity in these regions.

Document US2007252473A1 discloses a dynamo-electric machine rotor in which spaced core slots are formed in a cylindrical rotor core, rotor coils of stacked turns are fitted into the core slots to form multiple nested rings around a magnetic pole of the rotor, ends of the rotor coils are fixed by an retaining ring, and a spacer is arranged in each of circumferential gaps between the ends of the rotor coils.

### OBJECTIVES OF THE INVENTION

It is one of the objectives of the invention to provide a technical solution that solves the lack of homogeneity of the air flow, and consequently of the temperature, in the region of the coil head of rotors of the cylindrical pole type applied in rotary electrical machines.

It is another objective of the invention to provide means that allow the maintenance of the structural integrity of the coils during operation, without, however, compromising the distribution of air flow in this region.

It is yet another object of the invention to provide a rotor whose transverse and longitudinal displacement of the coils is avoided.

### BRIEF DESCRIPTION OF THE INVENTION

The present invention is defined by the annexed set of claims.

The present invention achieves the above objectives by means of a rotor for a rotary electric machine comprising a pack of plates mounted on a shaft, wherein said pack of plates is composed of at least two regions, a first region being provided with slots, in which said slots are housed coils that form turns adjacent to each other; and a second coil head region, wherein the ends of said coils are located. At least one spacer shim is disposed between said turns in a straight longitudinal region of said coils, and the at least one spacer shim comprises:
a base part configured to extend longitudinally from the end face of the pack of plates, in the longitudinal straight region of said coils, and
at least one wedge part extending substantially perpendicularly from the base part and connected to the base part, wherein the at least one wedge part and the base part are non-integral and wherein the at least one wedge part is mounted between respective side faces of two adjacent turns, wherein the at least one wedge part has at least one through-opening which allows the passage of an air flow for the exchange of heat with said coils, the at least one through-opening communicating gaps formed between consecutive wedge parts to form at least one chamber between two consecutive wedge parts.

The base part of the shim may be configured to completely close an area of said longitudinal straight region extending between the face of the rotor pack and a curved region of the coil.

In one embodiment of the present invention, the base part is a parallelepiped shaped base part, and the spacer shim comprises a plurality of wedge parts extending substantially perpendicularly from the base part.

In another embodiment of the present invention, the base part is a curved wall, and the spacer shim comprises a plurality of wedge parts extending substantially perpendicularly from the curved wall.

In one embodiment of the present invention, the at least one wedge part is permanently attached to said base part.

The spacer shim may be fixed by gluing or by lashing between two adjacent turns.

In one embodiment of the invention, the rotor comprises a plurality of spacer shims, at least two of the spacer shims comprising different amounts of wedge parts.

### BRIEF DESCRIPTION OF THE DRAWINGS

The present invention will be described in more detail below, with references to the accompanying drawings, in which:
Figure 1 - is a perspective view of a rotary electric machine rotor of the cylindrical pole type;
Figure 2 - is a detail view of the rotor coil head illustrated in figure 1;
Figure 3 - is a detail view of the rotor coil head illustrated in figure 1, the coil head including spacer shims according to an embodiment of the present invention;
Figure 4 - is a detail view of the coil head including spacer shims according to an embodiment of the present invention, the view including a longitudinal sectional cut to allow a better viewing of the shims;
Figure 4a - is an enlarged view of detail A shown in Figure 4;
Figure 5 - is a perspective view of a spacer shim according to an embodiment of the present invention, figure 5a showing a perspective view of the assembled shim and figure 5b showing an exploded perspective view of the shim;
Figure 6a - is a side view of the rotor according to an embodiment of the present invention;
Figure 6b - is a view of the section AA shown in figure 6a;
Figure 7a and 7a' - side and cross-sectional views of the shim according to one embodiment of the present invention;
Figure 7b and 7b' - side and cross-sectional views of the shim according to an example not part of the present invention;
Figure 7c and 7c' - side and cross-sectional views of the shim according to an example not part of the present invention;
Figures 8a to 8d - front views of different embodiments of the shim according to the present invention;
Figures 9a to 9f - views of different embodiments of shim profile according to the present invention;
Figure 10 - perspective view of a configuration of plurality of spacer shims according to an embodiment of the present invention;
Figure 11 - perspective view of an embodiment of the spacer shim according to an embodiment of the present invention;
Figure 12 - cross-sectional view of a rotor according to an embodiment of the present invention;
Figure 12a - enlarged view of detail A of figure 12;
Figure 13 - cross-sectional view of a rotor according to an embodiment of the present invention; and
Figure 13a - enlarged view of detail A of figure 13.

### DETAILED DESCRIPTION OF THE INVENTION

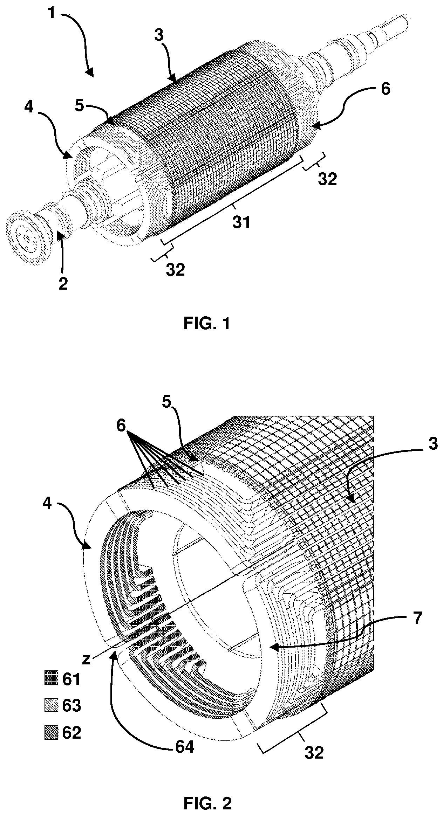

The present invention will be described below based on embodiments shown in Figures 1 to 13.

Various implementation and embodiment examples are described below. Irrespective of the name given to these examples (embodiments, examples, variants, etc.) and of the qualifiers used (e.g. preferably, etc.), only those parts of the description which are included in the scope of the claims form part of the present invention, the other examples being set out for illustrative purposes only and being useful only for highlighting aspects specific to the invention in relation to what does not form part of it.

Figure 1 shows a rotor (1) applied in rotary electrical machines of the cylindrical pole type, composed simply of a shaft (2) and a pack of plates (3), also called a rotor pack, in which the coils (4) of a conductive element are inserted. It is understood that a person skilled in the art would have no difficulty in understanding that the rotor may contemplate other components not described herein, so that only those elements relevant to the understanding of the present invention will be described and presented.

The rotor pack (3) can be divided into three portions: a first region (31) where the coils (4) are inserted into the slots (5) and remain internal to the pack of plates (3), and two second regions (32), most commonly called the rotor coil heads, where the ends of the coils (4) are external to the pack of plates (3).

The coils (4) when grouped in the same slot (5) are now called turns (6), as shown in greater detail in figure 2.

In the rotor shown in figure 2, there is a coil containing six turns (6) per pole (7), the pole (7) therefore being the set of coils (4) grouped in turns (6) inside slots (5). In this embodiment a rotor (1) with four poles (7) is presented.

The coil head (32) can be subdivided into three regions: a first region (61) comprising the straight portion of the coil (4) exiting the interior of the slot (5) of the pack of plates (3). In this first region (61), the turns (6) are arranged in the same direction as the axis of rotation z of the machine. A second region (62) comprises another straight portion of the coil (4), but transverse to the portion of the first region (61), that is, in this second region (62) the turns form cylindrical segments along the outer diameter of the rotor pack (3). Finally, connecting the first region (61) and the second region (62) is the third region (63), or curve of the coil, which receives this name by its geometry resulting from the mechanical forming process of the conductive element to form the coil (4).

All turns (6) have these three regions and are parallel to each other. In cylindrical pole type rotors it is common to fill the space between two consecutive turns (6) in the second regions (62) with some type of insulating element shim, thus preventing, in operation, the poles (7) from moving in a combined movement in the radial and axial directions. In some cases, as in the rotors of machines with associated high power, the first region (61) may also feature said shims.

It may be also classified a fourth region (64), or region between poles, in the coil head (32) comprised by the space between the last turns (6) from two adjacent poles (7). In rotors of machines with associated high power, shims can be used in this fourth region (64).

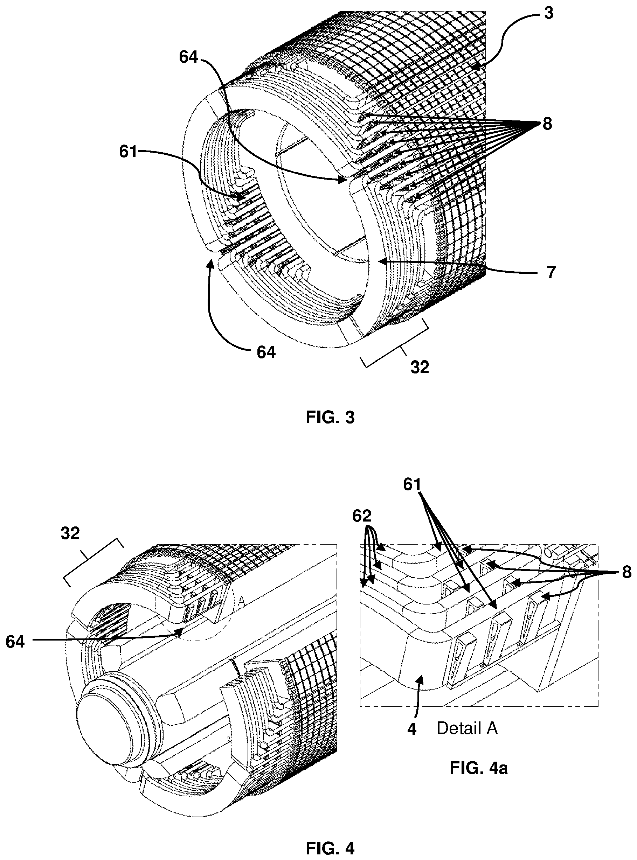

Figure 3 shows a coil head (32) equivalent to that shown in figure 2, but the regions between poles (64) and the first regions (61) are filled by spacer shims (8) according to one embodiment of the present invention.

Figures 4 and 4a show a first embodiment of the present invention. Thus figure 4 shows a section of the coil head (32) in which are illustrated in detail the spacer shims (8) according to the first embodiment of the present invention.

Thus, as shown in figures 4 and 4a, the spacer shims (8) are mounted in the region between poles (64) and in the first regions (61). In the embodiment shown in these figures, the spacer shims (8) are mounted adjacent to the side of the coils (4), between two consecutive turns (6).

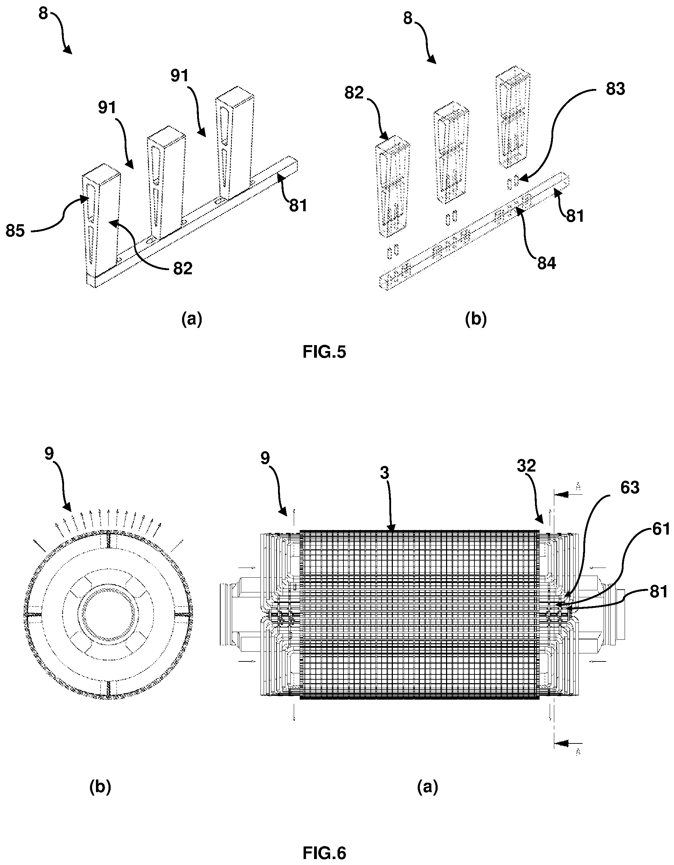

Figures 5a and 5b show, in more detail, the spacer shim (8) according to the first embodiment of the present invention, with figure 5a showing the mounted shim and figure 5b showing an exploded configuration view of the shim.

The spacer shim 8 comprises a base part (81) and at least one wedge part (82).

The base part (81) extends longitudinally from the end face of the pack of plates (3), in the straight longitudinal region (61) of said coils (4). Thus, the base part (81) performs thermal flow control function of the coil head vent flow.

The wedge part (82) extends perpendicularly from the base part (81) and performs a structural function of maintaining the positioning of said turns (6) when rotating said rotor (1). Accordingly, the wedge part (82) may also perform thermal function, in that it has through openings for airflow passage.

In the embodiment shown in figures 5a and 5b, the shim (8) comprises three wedge parts (82), the base part (81) being a straight part of parallelepipidic shape that connects the wedge parts (82). In the embodiment shown, this connection may be realized by means of pins (83) housed in holes (84) contained in both the base part (81) and the wedge parts (82). However, the connection between the wedge parts (82) and the base part (81) can be accomplished by male-female fitting, bonding, ultrasonic welding, or any alternative fastening process.

As shown in the figures, the wedge part (82) of the shim (8) may comprise through openings (85) that communicate the gaps between consecutive wedge parts, which will subsequently form chambers (91) formed between two consecutive wedge parts (82).

Figures 6a and 6b show a side view (figure 6a) and a cross-section (figure 6b - section AA) show the rotor incorporating the shim according to the first embodiment of the present invention.

The base part (81) is configured so as to prevent the air flow (9) from the ventilation circuit coming from the internal fan (not shown in the figures) from passing preferably through the first region (61) due to the lower pressure drop associated with this region, thus forcing it through the region of the coil curve (63). This third region (63), because it has a smaller area when compared to the straight region (61), presents a greater pressure drop for the flow, therefore a lower ventilation air flow (9) passes through this region. This imbalance in the air flow rate along the coil head (32) leads to the equivalent irregularity in the distribution of temperatures along the coil head (32) of the rotor. Thus, the base part (81) of the spacer shim (8) is preferably configured to close the entire longitudinal dimension comprised between the face of the pack of plates (3) and the beginning of the coil curve (63).

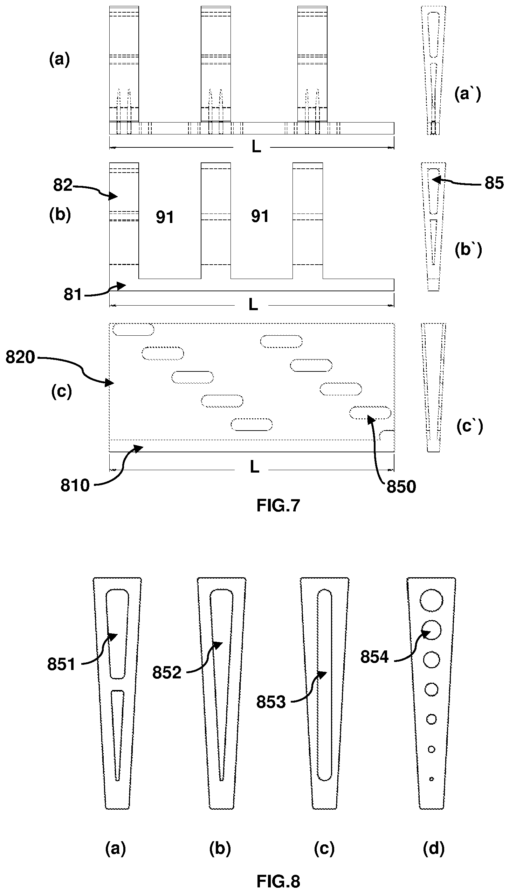

Figure 7 shows possible different geometric variations of the spacer shim.

Thus, figures 7a (side view) and 7a' (cross section) show the geometric variation corresponding to the spacer shim (8) described in relation to figure 5.

Figures 7b (side view) and 7b' (cross section) show a second example of the shim (8), wherein the wedge parts (82) are integrated into the base part (81). In this embodiment, the shim is manufactured in a single piece and can be obtained from the machining of a whole block, by additive manufacturing, such as by 3D printing of the component, or any alternative technology. In this example, there are also through openings (85) communicating the chambers (91).

Figures 7c (side view) and 7c' (cross section) show a third example of the shim (8), wherein the spacer shim (8) has an integral shape, with a single wedge part (820), with longitudinal dimension (L) equivalent to the longitudinal dimension (L) of the base part (810) of the other embodiments.

In this third example, the base part (810) is formed by a projection from the lower end of the wedge part (820) with a width slightly larger than the body of the wedge part (820).

In this example, the outer side surfaces of the wedge part (820) has elongated projections (850) that, when arranged between the side surfaces and the sides of the coils (4), form channels for the flow of air. These channels are thus equivalent to the chambers (91) of the other embodiments.

Figure 8 shows possible different geometric variations of the through openings of the spacer shim according to the present invention.

In the embodiment of figure 8a, the through openings (851) are trapezoidal in shape and are divided into at least two parts.

In the embodiment of figure 8b, the through opening (852) is a single trapezoidal opening (852), and the single opening acts by expanding the air passage area of the ventilation flow (9), however this geometry has less structural resistance than option 8a.

In the embodiment of figure 8c, the through opening (853) is a single oblong channel (853) along the vertical extension of the wedge part (82).

In the embodiment of figure 8d, the through openings (854) are simple circular holes (854) distributed along the vertical dimension of the wedge part.

It is noteworthy that, although figure 8 presents different variations for the through openings, in embodiments of the present invention, the chambers formed by the through openings may give rise to channels formed by projections on the outer surface of the wedge part, as described in relation to figure 7c.

The selection of the ideal shape of the through openings and projections is determined by the combination of the transverse air passage area together with the mechanical strength necessary to obtain the temperatures and stress levels permissible in the design.

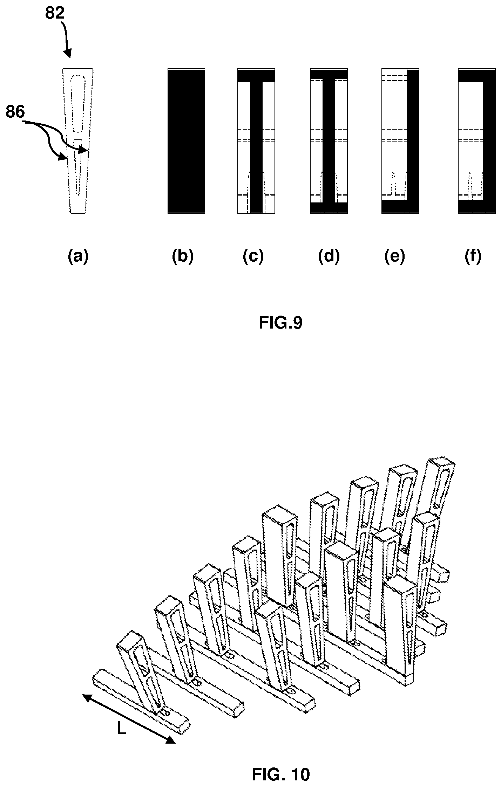

Figure 9 shows possible different geometric variations of the body of the wedge part (82) of the spacer shim according to the present invention.

Thus, figure 9a presents a wedge part 82 with two surfaces (86) that make contact with the respective sides of the coil (4).

In the embodiment of figure 9b, the lateral surface (86) is whole, the entire surface extension of the side of the wedge part (82) being in direct contact with the side of the coil (4).

In the embodiment of figure 9c, the lateral surface (86) presents a "T" profile, minimizing the contact area between the lateral (86) of the wedge part (82) and the coil (4).

In other variations, the side surface may exhibit an "I" profile (figure 9d), an "L" profile (figure 9e), or a "C" profile (figure 9f).

It is noteworthy that the selected profile must be such that: it is integral in every vertical dimension of the wedge part (82), in order to provide proper support to all the wires that make up the coil (4); and results in the smallest contact area with the side of the coil (6) possible, in order to minimize the heat exchange area in this region.

Accordingly, in the embodiment of the invention in which air flows through channels formed between the outer surface of the wedge part (820) and the side of the coil, by means of the projections (850) on the outer side surface of the wedge part (820), the projections (850) must be arranged so as to respect the same vertical distribution criterion.

The variations presented in figures 8 and 9 may be combined, with different geometries of the through openings being combined with different body geometries of the wedge part.

Similarly, the variations of figures 8 and 9 may be combined with the variations of figures 7a and 7b.

As previously mentioned, the spacer shims (8) are preferably mounted adjacent to the side of the coils (4), between two consecutive turns (6). Each turn (6) has a different longitudinal length, the turns (6) being more internal, that is, closer to the pack of plates (3), shorter when compared to the turns (6) more external to the coil head (32). This difference in length causes the coil curves (63) to be arranged diagonally. As a consequence, it is necessary that the longitudinal length "L" of the spacer shims (8) is different in each of the first regions (61) of the several turns (6), to accompany this misaligned arrangement of the coil curves (63).

Figure 10 shows an example of a set of spacer shims (8) in their final mounting position (with the coils (4) and the pack of plates (3) hidden), thus displaying the longitudinal length difference "L" of the various spacer shims (8). Of course, one skilled in the art will understand that any of the previously presented shim embodiments may be applied to the assembly shown.

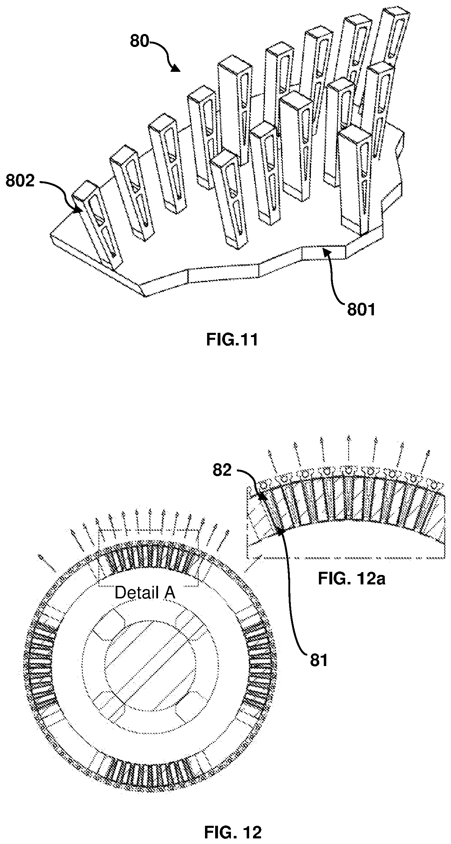

Figure 11 shows another embodiment of the spacer shim (80), wherein the base part (801) is a continuous curved wall in which a plurality of wedge parts (802) are connected or integrated.

Figures 12 and 12a show the plurality of spacer shims (8) installed on a rotor, each of the shims being mounted adjacent to the side of the coils (4), between two consecutive turns (6). Thus, the wedge part (82) is positioned on the sides of the coils and the base part (81) is positioned perpendicular to the wedge parts (83), extending longitudinally between the face of the pack of plates (3) and the beginning of the coil curve (63).

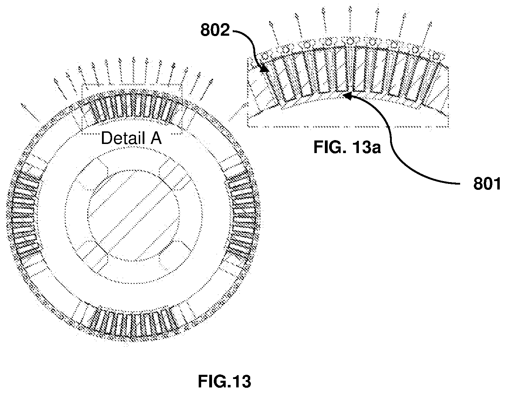

Figures 13 and 13a show the spacer shim formed by the single curved wall base part (801) with the plurality of wedge parts (802) connected to the single base part (801). Thus, the wedge parts (82) are positioned on the sides of the coils and the base part (801) is positioned perpendicular to the wedge parts (83), extending longitudinally between the face of the pack of plates (3) and the beginning of the coil curve (63).

The number of wedge parts varies according to the longitudinal length of the rotor coil head (32), therefore, depending on the amount of turns (6), the outer and inner diameters of the rotor (3), the total mass of the coils (4) and the rotation associated with the equipment. That is, the number of wedge parts will depend on the mechanical stresses suffered by the coil head (32) and the consequent radial, axial and transverse displacements, which it will be subjected to. This same criterion will define the arrangement of the spacer shims (8), that is, whether they will be used in the straight part (61) of each of the turns (6), or only in part of them. In the embodiments presented, the spacer shims (8) are not used in all turns (6), and the straight region (61) between the first and second turns (6), with reference to the rotor pack (3), does not present a spacer shim (8).

The spacer shims (8) can be mounted between the turns (6) in several ways, one of the embodiments being the gluing of the lateral face (86) of the wedge parts on the side of the coils (4). Another embodiment is to position the shims and then tie them against the turns (6) using suitable material for the application. However, to carry out the tying, it is necessary to have holes contained in the base part of the spacer shim (8).

As examples of preferred embodiments of the present invention have been described, it should be understood that the scope of the present invention encompasses other possible variations of the inventive concept described, being limited only by the content of the appended claims.

## Claims

1. Rotor (1) for a rotary electric machine comprising a pack of plates (3) mounted on a shaft (2), wherein said pack of plates (3) is composed of at least two regions, a first region (31) being provided with slots (5), wherein coils (4) are housed in said slots (5) that form turns (6) adjacent to each other; and a second coil head region (32), wherein the ends of said coils (4) are located; at least one spacer shim (8) being arranged between said turns (6) in a straight longitudinal region (61) of said coils (4), the at least one spacer shim (8, 80) comprises:
a base part (81, 801) configured to extend longitudinally from the end face of the pack of plates (3), in the longitudinal straight region (61) of said coils (4), and
at least one wedge part (82, 802) extending substantially perpendicularly from the base part (81, 801) and connected to the base part (81, 801), wherein the at least one wedge part (82, 802) and the base part (81, 801) are non-integral and wherein the at least one wedge part (82, 802) is mounted between respective lateral faces of two adjacent turns (6), and
wherein the at least one wedge part (82, 802) has at least one through-opening (85), which allows the passage of an air flow for the exchange of heat with said coils (40), the at least one through-opening (85) communicating gaps formed between consecutive wedge parts (82, 802) to form at least one chamber (91) between two consecutive wedge parts (82).

2. Rotor (1) according to claim 1, **characterized in that** the base part (81) completely closes an area of said longitudinal straight region (61) extending between the face of the rotor pack (3) and a region of the curve (63) of the coil (4).

3. Rotor (1) according to claim 1 or 2, **characterized in that** the base part (81) is a parallelepiped-shaped base part, and the spacer shim (8) comprises a plurality of wedge parts (82) extending substantially perpendicularly from the base part (81).

4. The rotor (1) according to claim 1 or 2, **characterized in that** the base part (801) is a curved wall, and the spacer shim (80) comprises a plurality of wedge parts (802) extending substantially perpendicularly from the curved wall (801).

5. Rotor (1) according to any one of claims 1 to 4, **characterized in that** said at least one wedge part (82, 802) is permanently attached to said base part (81, 801).

6. Rotor (1) according to any one of claims 1 to 5, **characterized in that** the at least one spacer shim (8, 80) is fixed by tie between two adjacent turns (6).

7. Rotor (1) according to any one of claims 1 to 5, **characterized in that** it comprises a plurality of spacer shims (8), at least two of the spacer shims (8) comprise different amounts of wedge parts (82).

8. Rotary electric machine **characterized in that** it comprises a rotor (1) as defined in any one of claims 1 to 7.

## Patentansprüche

1. Ein Rotor (1) für eine rotierende elektrische Maschine, der ein Paket von Platten (3) aufweist, das auf einer Welle (2) montiert ist, wobei das genannte Paket von Platten (3) aus wenigstens zwei Bereichen zusammengesetzt ist, wobei ein erster Bereich (31) mit Nuten (5) versehen ist, wobei Spulen (4) in den genannten Nuten (5) untergebracht sind, die zueinander benachbarte Windungen (6) ausbilden; und ein zweiter Spulenkopfbereich (32), in dem die Enden der genannten Spulen (4) angeordnet sind; wobei wenigstens eine Distanzscheibe (8) zwischen den genannten Windungen (6) in einem geraden Längsbereich (61) der genannten Spulen (4) angeordnet ist, dass die wenigstens eine Distanzscheibe (8, 80) Folgendes aufweist:
einen Basisteil (81, 801), der eingerichtet ist, sich längs von der Stirnfläche des Pakets von Platten (3) in dem geraden Längsbereich (61) der genannten Spulen (4) zu erstrecken, und
wenigstens einen Keilteil (82, 802), der sich im Wesentlichen senkrecht von dem Basisteil (81, 801) erstreckt und mit dem Basisteil (81, 801) verbunden ist, wobei der wenigstens eine Keilteil (82, 802) und der Basisteil (81, 801) nicht integral sind und wobei der wenigstens eine Keilteil (82, 802) zwischen jeweiligen Seitenflächen von zwei benachbarten Windungen (6) montiert ist, und
wobei der wenigstens eine Keilteil (82, 802) wenigstens eine Durchgangsöffnung (85) hat, die den Durchgang eines Luftstroms zum Wärmeaustausch mit den genannten Spulen (40) ermöglicht, wobei die wenigstens eine Durchgangsöffnung (85) Zwischenräume verbindet, die zwischen aufeinanderfolgenden Keilteilen (82, 802) ausgebildet sind, um wenigstens eine Kammer (91) zwischen zwei aufeinanderfolgenden Keilteilen (82) auszubilden.

2. Der Rotor (1) nach Anspruch 1, **dadurch gekennzeichnet, dass** der Basisteil (81) einen Bereich des genannten geraden Längsbereichs (61), der sich zwischen der Stirnfläche des Rotorpakets (3) und einem Bereich der Krümmung (63) der Spule (4) erstreckt, vollständig verschließt.

3. Der Rotor (1) nach Anspruch 1 oder 2, **dadurch gekennzeichnet, dass** der Basisteil (81) ein parallelepipedförmiger Basisteil ist und die Distanzscheibe (8) eine Vielzahl von Keilteilen (82) aufweist, die sich im Wesentlichen senkrecht von dem Basisteil (81) erstrecken.

4. Der Rotor (1) nach Anspruch 1 oder 2, **dadurch gekennzeichnet, dass** der Basisteil (801) eine gekrümmte Wand ist und die Distanzscheibe (80) eine Vielzahl von Keilteilen (802) aufweist, die sich im Wesentlichen senkrecht von der gekrümmten Wand (801) erstrecken.

5. Der Rotor (1) nach einem der Ansprüche 1 bis 4, **dadurch gekennzeichnet, dass** der genannte wenigstens eine Keilteil (82, 802) dauerhaft an dem genannten Basisteil (81, 801) befestigt ist.

6. Der Rotor (1) nach einem der Ansprüche 1 bis 5, **dadurch gekennzeichnet, dass** die wenigstens eine Distanzscheibe (8, 80) durch Binden zwischen zwei benachbarten Windungen (6) befestigt ist.

7. Der Rotor (1) nach einem der Ansprüche 1 bis 5, **dadurch gekennzeichnet, dass** er eine Vielzahl von Distanzscheiben (8) aufweist, wobei wenigstens zwei der Distanzscheiben (8) unterschiedliche Anzahlen von Keilteilen (82) aufweisen.

8. Eine rotierende elektrische Maschine, **dadurch gekennzeichnet, dass** sie einen Rotor (1), wie in einem der Ansprüche 1 bis 7 definiert, aufweist.

## Revendications

1. Rotor (1) destiné à une machine électrique rotative comprenant un ensemble de tôles (3) monté sur un arbre (2), dans lequel ledit ensemble de tôles (3) est composé d'au moins deux régions, une première région (31) étant munie de fentes (5), dans lequel des bobines (4) sont logées dans lesdites fentes (5) ce qui forme des spires (6) adjacentes ; et une deuxième région de tête de bobine (32) dans laquelle sont situées les extrémités desdites bobines (4) ; au moins une cale d'espacement (8) étant agencée entre lesdites spires (6) dans une région longitudinale rectiligne (61) desdites bobines (4), l'au moins une cale d'espacement (8, 80) comprend :
une partie de base (81, 801) configurée pour s'étendre longitudinalement à partir de la face d'extrémité du ensemble de tôles (3), dans la région droite longitudinale (61) desdites bobines (4), et
au moins une partie en forme de coin (82, 802) s'étendant sensiblement perpendiculairement à partir de la partie de base (81, 801) et connectée à la partie de base (81, 801), dans lequel l'au moins une partie en forme de coin (82, 802) et la partie de base (81, 801) ne sont pas monolithiques et dans lequel l'au moins une partie en forme de coin (82, 802) est montée entre des faces latérales respectives de deux spires adjacentes (6), et
dans lequel l'au moins une partie en forme de coin (82, 802) a au moins une ouverture traversante (85) permettant le passage d'un flux d'air pour l'échange de chaleur avec lesdites bobines (40), l'au moins une ouverture traversante (85) communiquant avec des espaces formés entre des parties en forme de coin consécutives (82, 802) pour former au moins une chambre (91) entre deux parties en forme de coin consécutives (82).

2. Rotor (1) selon la revendication 1, **caractérisé en ce que** la partie de base (81) ferme complètement une zone de ladite région droite longitudinale (61) s'étendant entre la face de l'ensemble de rotor (3) et une région de la courbe (63) de la bobine (4).

3. Rotor (1) selon la revendication 1 ou 2, **caractérisé en ce que** la partie de base (81) est une partie de base de forme parallélépipédique, et la cale d'espacement (8) comprend une pluralité de parties en forme de coin (82) s'étendant sensiblement perpendiculairement à partir de la partie de base (81).

4. Rotor (1) selon la revendication 1 ou 2, **caractérisé en ce que** la partie de base (801) est une paroi incurvée, et la cale d'espacement (80) comprend une pluralité de parties en forme de coin (802) s'étendant sensiblement perpendiculairement à partir de la paroi incurvée (801).

5. Rotor (1) selon l'une quelconque des revendications 1 à 4, **caractérisé en ce que** ladite au moins une partie en forme de coin (82, 802) est fixée de manière permanente à ladite partie de base (81, 801).

6. Rotor (1) selon l'une quelconque des revendications 1 à 5, **caractérisé en ce que** l'au moins une cale d'espacement (8, 80) est fixée par un lien entre deux spires adjacentes (6).

7. Rotor (1) selon l'une quelconque des revendications 1 à 5, **caractérisé en ce qu'**il comprend une pluralité de cales d'espacement (8), au moins deux des cales d'espacement (8) comprenant des quantités différentes de parties en forme de coin (82).

8. Machine électrique rotative, **caractérisée en ce qu'**elle comprend un rotor (1) tel que défini dans l'une quelconque des revendications 1 à 7.
